# FASCICULE DE BREVET EUROPEEN

(11) **EP 3 390 566 B1**
(45) Date de publication et mention de la délivrance du brevet: **18.11.2020**
(21) Numéro de dépôt: 16819978.4
(22) Date de dépôt: 05.12.2016
(51) Int. Cl.: C09J 179/04, C09J 179/02, C09J 161/34, C08G 73/06, C08G 73/02, C08G 14/06, C08G 75/12, C09J 181/02, B60C 1/00, C08G 65/40, B60C 9/00

(54) **POLYBENZOXAZINE UTILISABLE POUR LE REVÊTEMENT DE MÉTAL ET SON COLLAGE À DU CAOUTCHOUC**
POLYBENZOXAZIN ZUM BESCHICHTEN VON METALL UND VERBINDEN DESSELBEN MIT KAUTSCHUK
POLYBENZOXAZINE THAT CAN BE USED FOR COATING METAL AND BONDING OF SAME TO RUBBER

(30) Priorité: 16.12.2015 FR 1562499
(43) Date de publication de la demande: 24.10.2018
(73) Titulaire: Compagnie Générale des Etablissements Michelin, 63000 Clermont-Ferrand (FR)
(72) Inventeur: FEDURCO, Milan, 63040 Clermont-Ferrand Cedex 9 (FR); RIBEZZO, Marco, 63040 Clermont-Ferrand Cedex 9 (FR)
(74) Mandataire: Desbordes, Guillaume
(86) Numéro de dépôt international: PCT/FR2016/053211
(87) Numéro de publication internationale: WO 2017/103375

(56) Documents cités:
- JP-A- 2010 265 480
- US-A1- 2007 129 509

## Description

### 1. DOMAINE DE L'INVENTION

La présente invention est relative aux résines thermodurcissables, utilisables notamment dans les systèmes adhésifs destinés en particulier au collage de métal à du caoutchouc.

Elle est plus particulièrement relative aux polymères à unités benzoxazine ou « polybenzoxazines » utilisables notamment comme couches adhésives dans des composites métal / caoutchouc destinés à la fabrication d'articles en caoutchouc tels que des bandages, pneumatiques ou non pneumatiques, pour véhicules automobiles.

### 2. ETAT DE LA TECHNIQUE

Les composites métal / caoutchouc, en particulier pour bandages pour véhicules automobiles, sont bien connus. Ils sont le plus souvent constitués d'une matrice en caoutchouc insaturé généralement diénique, réticulable au soufre, comportant des éléments de renforcement (ou « renforts ») métalliques tels que des fils, films, rubans ou câbles en acier au carbone.

Soumis à des contraintes très importantes lors du roulage des bandages, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre caoutchouc et renforts joue un rôle prépondérant dans la pérennité de ces performances. Le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton lors de la vulcanisation ou cuisson du caoutchouc. Pour améliorer l'adhésion, on utilise en outre généralement, dans ces compositions de caoutchouc, des sels organiques ou des complexes de métal tels que des sels de cobalt, en tant qu'additifs promoteurs d'adhésion.

Or, on sait que l'adhésion entre l'acier au carbone et la matrice de caoutchouc est susceptible de s'affaiblir au cours du temps, du fait de l'évolution progressive des sulfures formés sous l'effet des différentes sollicitations rencontrées, notamment mécaniques et/ou thermiques, le processus de dégradation ci-dessus pouvant être accéléré en présence d'humidité. D'autre part, l'utilisation de sels de cobalt rend les compositions de caoutchouc plus sensibles à l'oxydation et au vieillissement, et en augmente significativement le coût, sans compter qu'il est souhaitable de supprimer à terme l'emploi de tels sels de cobalt dans les compositions de caoutchouc, en raison de l'évolution récente de la réglementation européenne sur ce type de sels métalliques.

Pour toutes les raisons exposées ci-dessus, les fabricants de composites métal / caoutchouc, en particulier les manufacturiers de bandages pour véhicules automobiles, sont à la recherche de solutions adhésives nouvelles pour faire coller les renforts métalliques aux compositions de caoutchouc, tout en palliant, au moins en partie, les inconvénients précités.

C'est ainsi que les demandes WO 2014/063963, WO 2014/063968, WO 2014/173838, WO 2014/173839 récemment publiées, déposées par les Demanderesses, ont décrit des polymères nouveaux à unités urée, uréthane ou thiourée, ainsi que leurs monomères de départ, qui répondent aux objectifs ci-dessus. Utilisés notamment comme primaire d'adhésion sur métal dans des composites métal / caoutchouc, ces polymères permettent très avantageusement de coller le métal aux matrices de caoutchouc en utilisant ensuite de simples colles textiles telles que des colles « RFL » (résorcinol-formaldéhyde-latex) ou autres compositions adhésives équivalentes, ou encore directement (c'est-à-dire sans emploi de telles colles) à ces matrices de caoutchouc lorsque ces dernières contiennent par exemple des élastomères insaturés fonctionnalisés appropriés tels que des élastomères époxydés. Ainsi peuvent être supprimés notamment les sels de cobalt (ou autres sels métalliques) dans les compositions de caoutchouc destinées à être reliées à des renforts métalliques laitonnés.

Poursuivant leurs recherches, les Demanderesses ont trouvé un polymère nouveau, du type thermodurcissable, qui à température ambiante présente les mêmes performances adhésives, vis-à-vis du métal et du caoutchouc, que les polymères précités mais qui présente une fois thermodurci (réticulé) une stabilité thermique et chimique encore améliorée. En outre, sa microstructure spécifique permet très avantageusement d'ajuster la flexibilité de la molécule selon les applications particulières visées.

### 3. BREVE DESCRIPTION DE L'INVENTION

La présente invention concerne une polybenzoxazine comportant au moins des unités récurrentes comportant au moins un motif répondant aux formules (I) ou (II) : 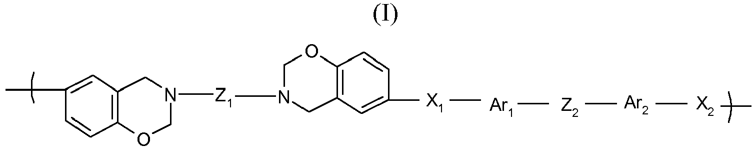 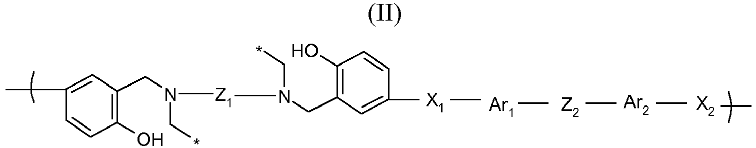 dans lesquelles :
- Z₁ représente un groupement de liaison au moins divalent, aliphatique, cycloaliphatique ou aromatique, comportant au moins un atome de carbone et optionnellement au moins un hétéroatome choisi parmi O, S, N et P ;
- X₁ et X₂, identiques ou différents, représentent O ou S ;
- Ar₁ et Ar₂, identiques ou différents, représentent un groupe phénylène, substitué ou non substitué ;
- Z₂ représente O ou (S)ₙ, le symbole « n » représentant un nombre entier égal à 1 ou supérieur à 1,
- le symbole «*» représentant le rattachement résultant de l'ouverture des cycles oxazines.

L'invention concerne également l'utilisation d'un tel polymère comme revêtement d'un substrat dont au moins la surface est au moins en partie métallique, en particulier pour le collage d'un tel substrat à un caoutchouc.

L'invention concerne également tout substrat dont au moins la surface est au moins en partie métallique, au moins ladite partie métallique étant revêtue du polymère selon l'invention.

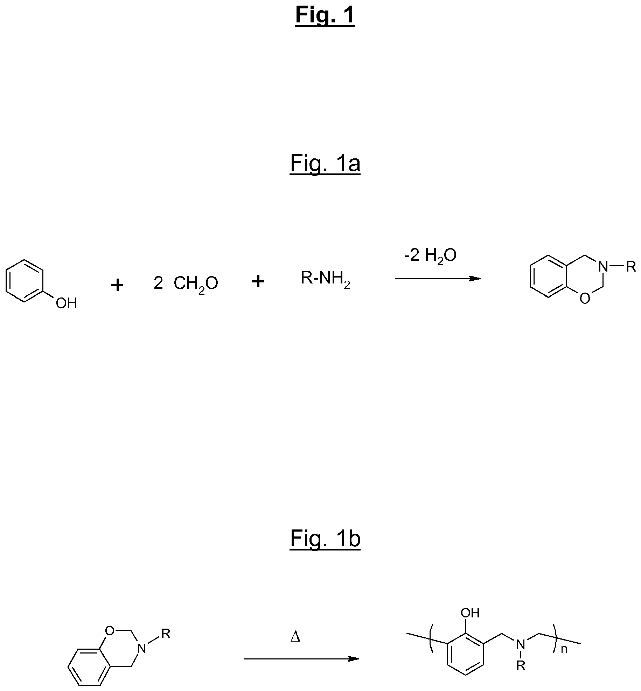

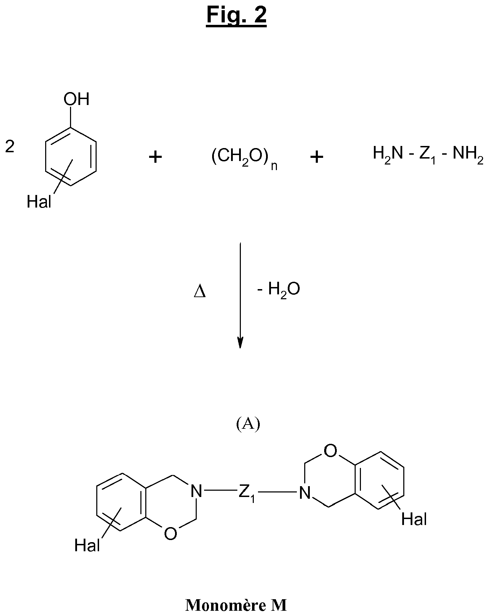

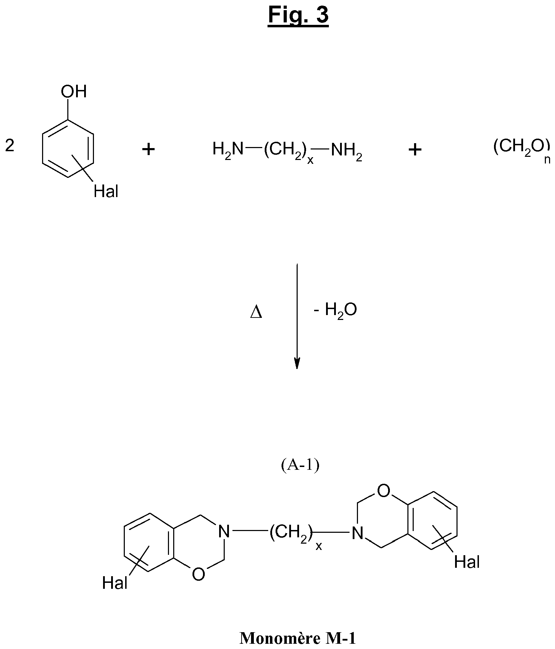

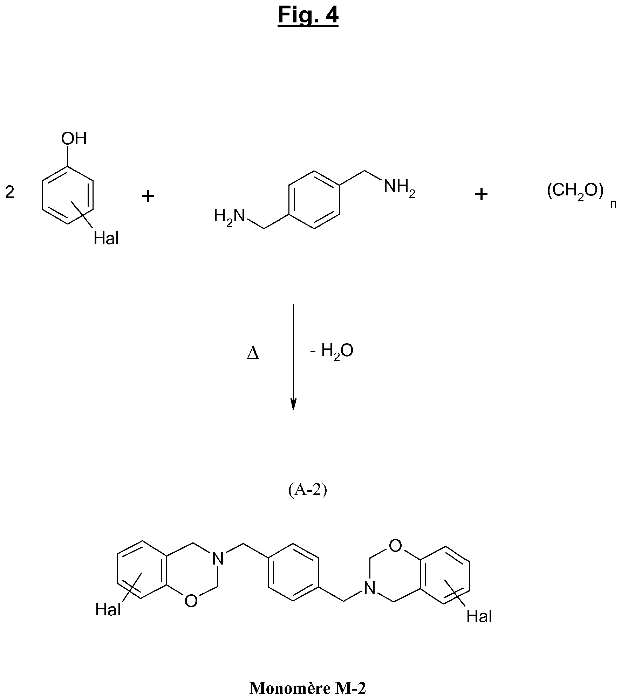

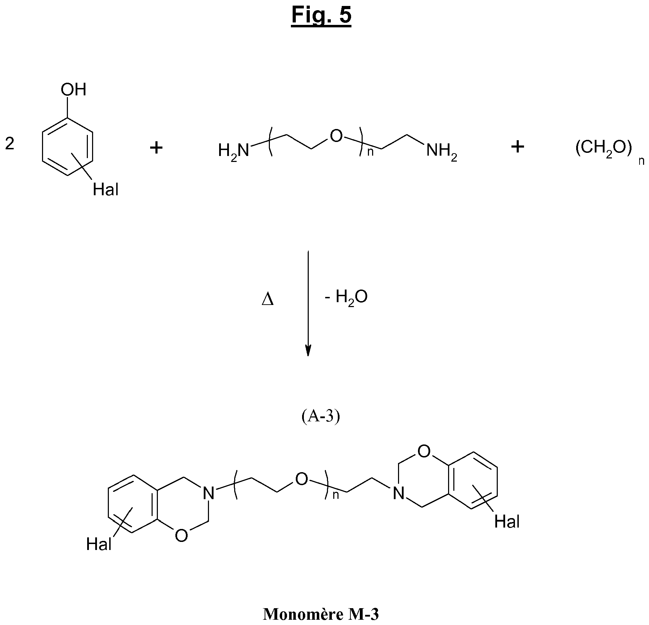

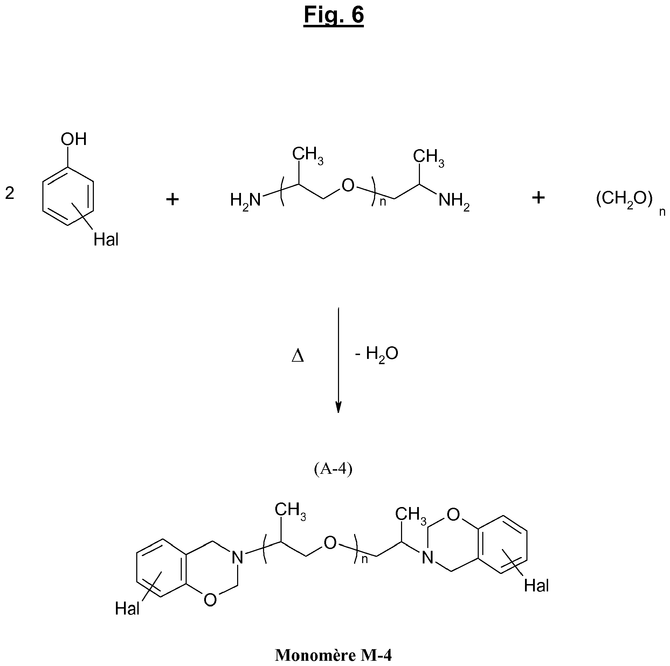

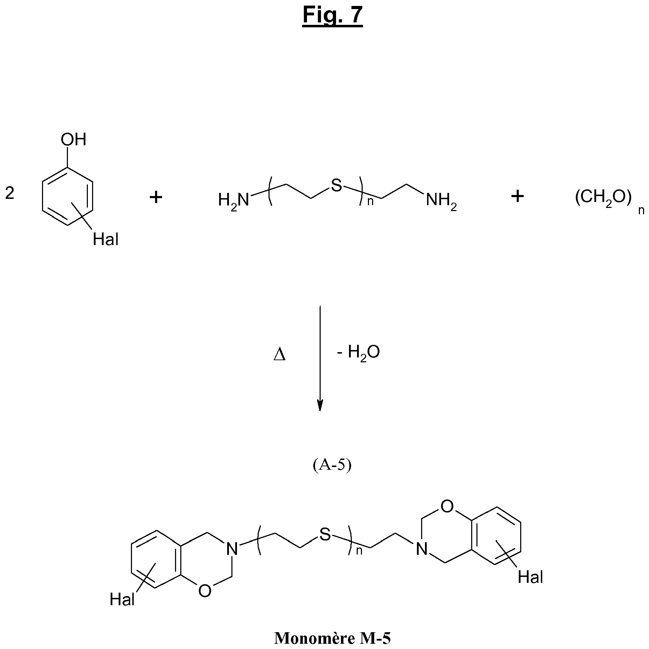

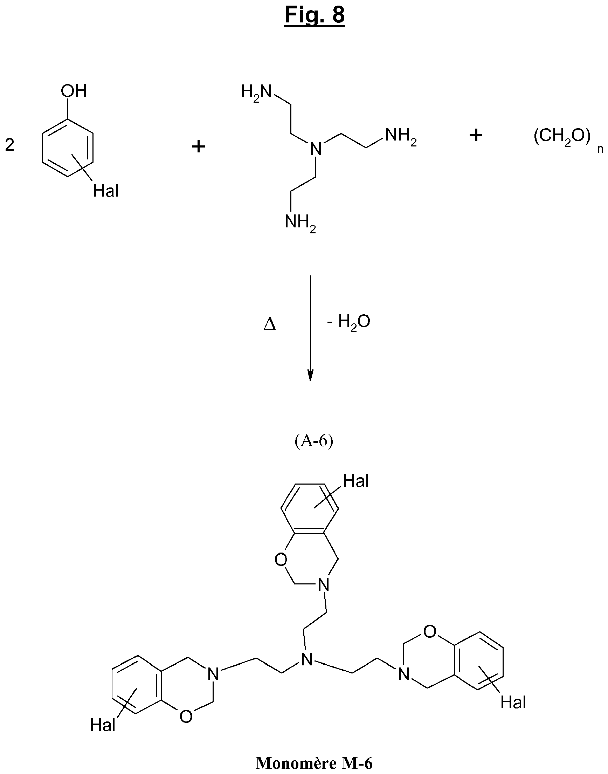

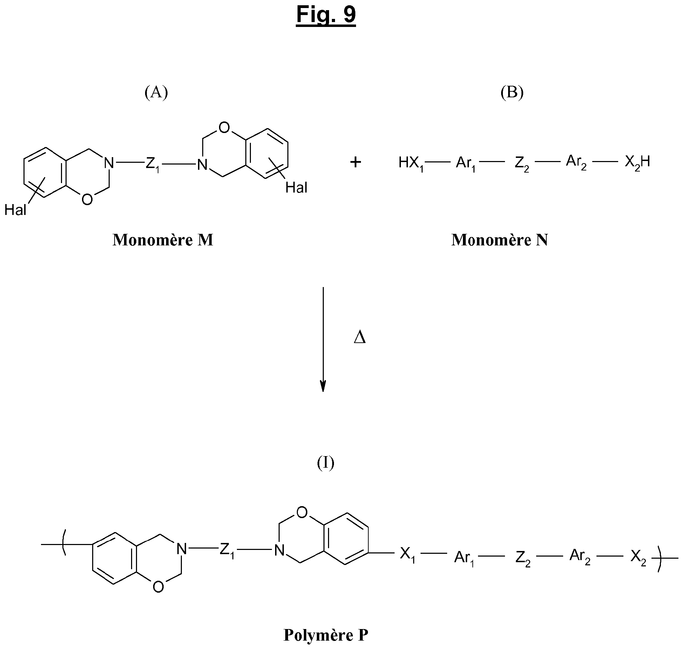

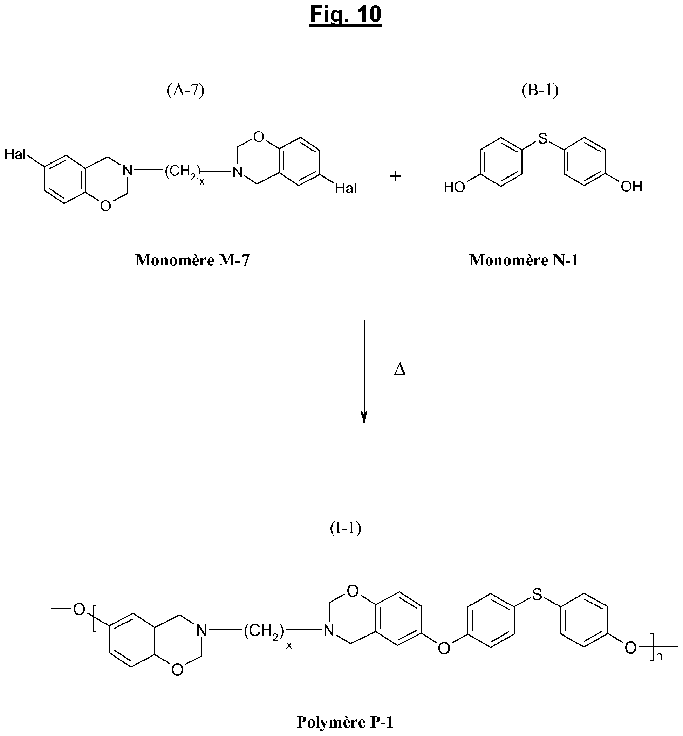

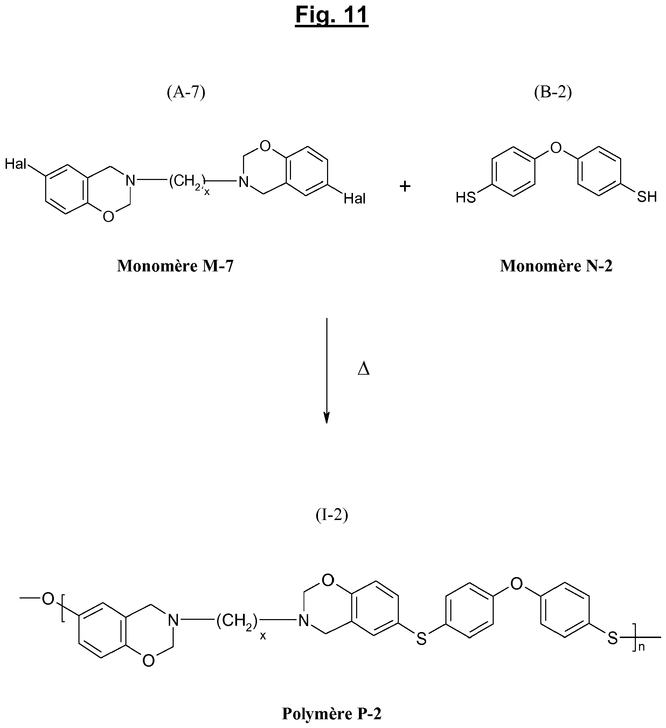

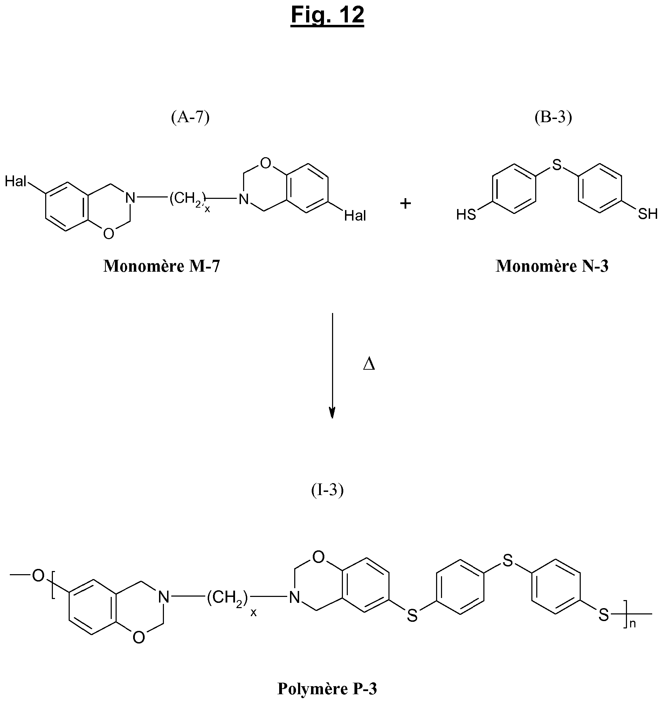

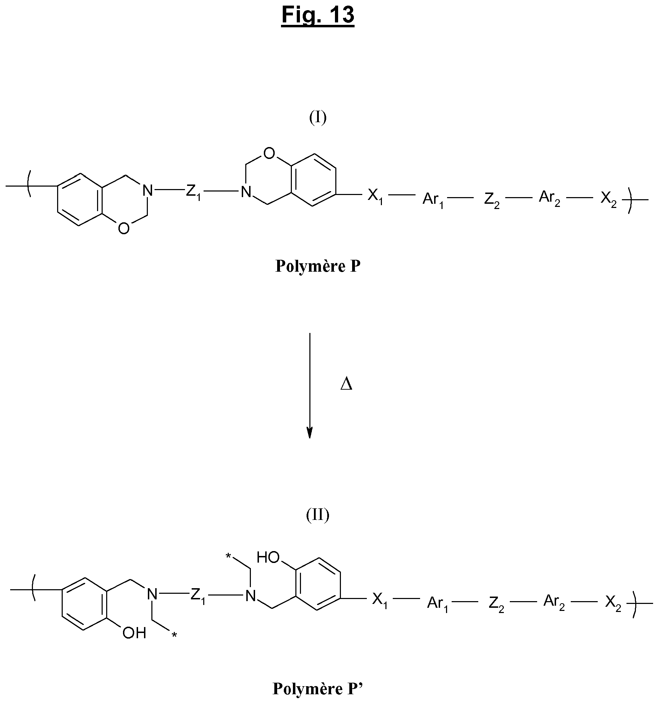

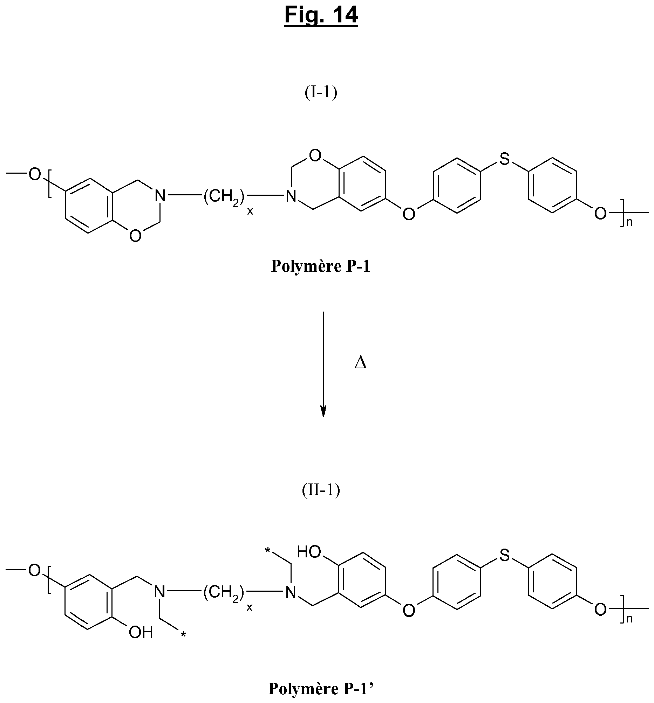

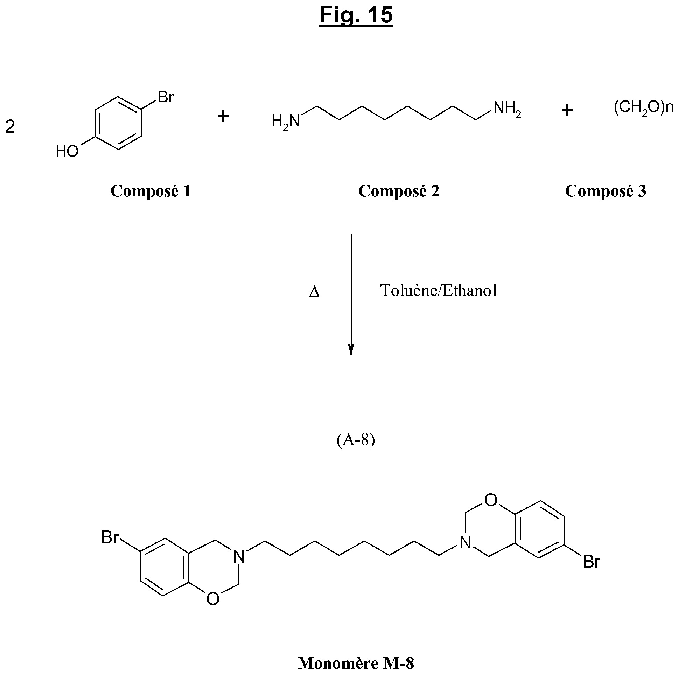

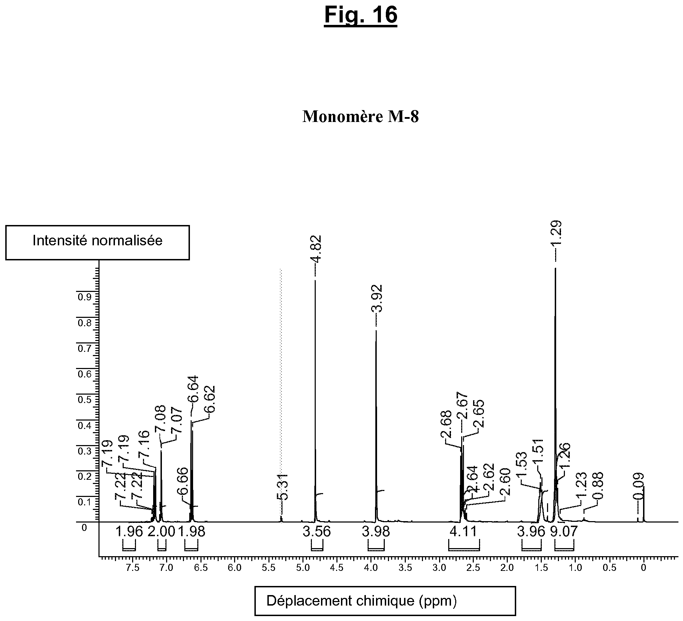

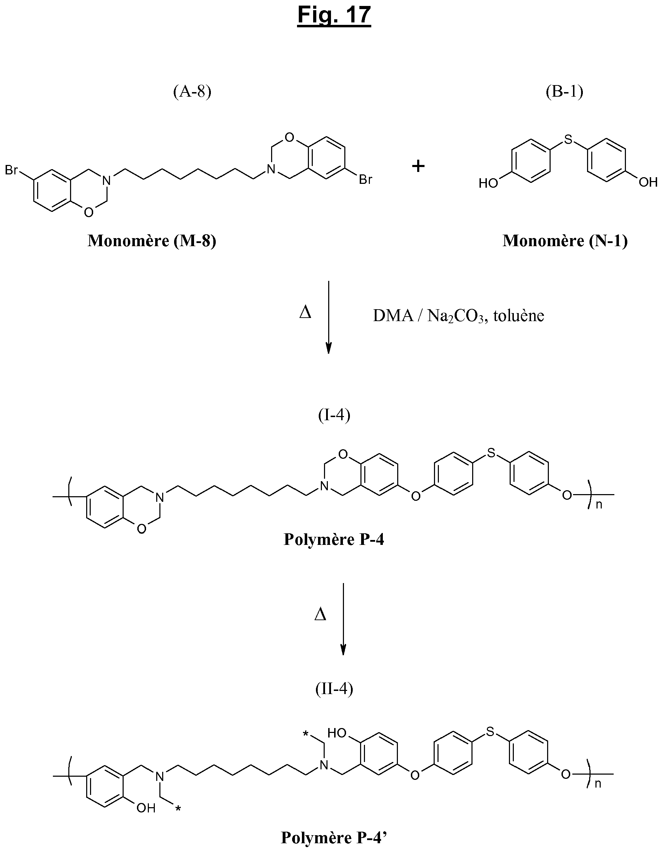

L'invention ainsi que ses avantages seront aisément compris à la lumière de la description détaillée et des exemples de réalisation qui suivent, ainsi que des figures relatives à ces exemples qui représentent ou schématisent :
- le principe général de synthèse d'un composé benzoxazine à partir de trois composés, phénol, formaldéhyde et amine (R résidu de l'amine) (Fig. la) ;
- le mécanisme d'ouverture, par apport thermique, du cycle oxazine (« *ring-opening* ») d'un tel composé benzoxazine (Fig. 1b) ;
- un schéma de synthèse général, à partir d'un phénol halogéné (le symbole Hal représentant un halogène), de paraformaldéhyde et d'une diamine, d'une benzoxazine halogénée de formule (A) (Monomère noté « M ») utilisable pour la synthèse d'une polybenzoxazine conforme à l'invention (Fig. 2) ;
- un schéma de synthèse possible, à partir de phénol halogéné, p-formaldéhyde et d'une diamine spécifique du type aliphatique, d'une benzoxazine halogénée particulière de formule (A-1) (Monomère noté M-1) utilisable pour la synthèse d'une polybenzoxazine conforme à l'invention (Fig. 3) ;
- un autre schéma de synthèse possible, à partir de phénol halogéné, p-formaldéhyde et d'une autre diamine spécifique, du type aromatique, d'un autre exemple de benzoxazine halogénée particulière de formule (A-2) (Monomère noté M-2) utilisable pour la synthèse d'une autre polybenzoxazine conforme à l'invention (Fig. 4) ;
- trois autres schémas de synthèse possibles, à partir de phénol halogéné, p-formaldéhyde et de diamines spécifiques toutes aliphatiques, d'autres exemples de benzoxazines halogénées particulières de formules respectives (A-3), (A-4) et (A-5) (Monomères notés M-3, M-4 et M-5) utilisables pour la synthèse d'autres polybenzoxazines conformes à l'invention (Fig. 5, Fig. 6 et Fig. 7) ;
- un autre schéma de synthèse possible, à partir de phénol halogéné, p-formaldéhyde et d'une triamine aliphatique spécifique, d'un autre exemple de benzoxazine halogénée particulière de formule (A-6) (Monomère noté M-6) utilisable pour la synthèse d'une autre polybenzoxazine conforme à l'invention (Fig. 8) ;
- un schéma de synthèse général d'un polymère polybenzoxazine (Polymère noté « P ») selon l'invention, à partir de la benzoxazine halogénée de formule (A) (Monomère M) de la Fig. 2 et d'un autre monomère de formule générique (B) (Monomère noté « N ») du type diol ou thiol aromatique (Fig. 9) ;
- un schéma de synthèse d'un polymère polybenzoxazine particulier (Polymère noté P-1) selon l'invention, à partir d'une benzoxazine halogénée particulière de formule (A-7) (Monomère M-7) et d'un autre monomère particulier de formule (B-1) (Monomère N-1) du type diol aromatique soufré (porteur d'une fonction thioéther) (Fig. 10) ;
- un schéma de synthèse d'une autre polybenzoxazine (Polymère noté P-2) selon l'invention, à partir de la benzoxazine halogénée particulière de formule (A-7) (Monomère M-7) de la Fig. 10 précédente et d'un autre monomère particulier de formule (B-2) (Monomère N-2) du type thiol aromatique (porteur d'une fonction éther) (Fig. 11) ;
- un schéma de synthèse d'une autre polybenzoxazine (Polymère noté P-3) selon l'invention, à partir de la benzoxazine halogénée de formule (A-7) (Monomère M-7) et d'un autre monomère particulier de formule (B-3) (Monomère N-3) du type thiol aromatique (porteur d'une fonction thioéther) (Fig. 12) ;
- la polybenzoxazine (Polymère noté ici P') selon l'invention de la Fig. 9 une fois ses cycles oxazine ouverts après traitement thermique du Polymère P (Fig. 13) ;
- la polybenzoxazine particulière (Polymère noté P-1') selon l'invention de la Fig. 10, une fois ses cycles oxazine ouverts après traitement thermique du Polymère P-1 (Fig. 14) ;
- le schéma de synthèse, à partir de phénol bromé (composé 1), p-formaldéhyde (composé 3) et d'une diamine spécifique aliphatique (composé 2), d'une dibenzoxazine bromée particulière de formule (A-8) (Monomère noté M-8) utilisable pour la synthèse de polybenzoxazines (Polymère P-4 et P-4' de la figure 17) conformes à l'invention (Fig. 15) ;
- le spectre RMN ¹H (500 MHz) du Monomère M-8 dissous dans CD₂Cl₂ (Fig. 16);
- le schéma de synthèse d'une polybenzoxazine particulière (Polymère noté P-4) selon l'invention, à partir de la benzoxazine halogénée particulière de formule (A-8) (Monomère M-8) de la Fig. 15 précédente et du monomère particulier de formule (B-1) (Monomère N-1), ainsi que la structure de ce polymère une fois ses cycles oxazine ouverts (Polymère noté P-4') (Fig. 17).

### 4. DESCRIPTION DETAILLEE DE L'INVENTION

On rappellera tout d'abord que les benzoxazines sont des composés de formule générale :

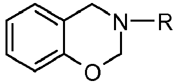

La figure la annexée rappelle le principe général de synthèse d'une benzoxazine, ici à partir (réaction de condensation) d'une molécule de phénol, de deux molécules de formaldéhyde et d'une amine (R désignant le résidu de l'amine), avec élimination de deux molécules d'eau.

La figure 1b rappelle quant à elle le mécanisme d'ouverture (« *ring-opening* ») du cycle oxazine d'un tel composé lors d'un apport thermique (représenté par le symbole Δ).

De nombreux composés ou monomères benzoxazines peuvent être ainsi synthétisés en utilisant divers phénols et amines selon leurs types de substituants. Ces groupes substituants peuvent fournir ensuite des sites polymérisables et permettre la synthèse de divers polymères benzoxazine (ou polybenzoxazines).

Benzoxazines et polybenzoxazines qui en sont issues sont des produits aujourd'hui bien connus de l'homme du métier ; pour ne citer que quelques exemples de publication, on peut mentionner les articles « Polybenzoxazines - New high performance thermosetting resins : synthesis and properties » ; N.N. Ghosh et al., Prog. Polym. Sci. 32 (2007), 1344-1391, ou « Recent Advancement on Polybenzoxazine - A newly Developed High Performance Thermoset », Y. Yaggi et al., J. Polym. Sci. Part A: Polym. Chem. : Vol. 47 (2009), 5565-5576, ainsi que par exemple les brevets ou demandes de brevet US 5 543 516, WO 2013/148408.

Comme expliqué en détail dans les documents ci-dessus, les polybenzoxazines ont la capacité remarquable, à haute température (par exemple, typiquement supérieure à 150°C voire à 200°C selon leur microstructure particulière), d'ouvrir leurs cycles oxazine et de conduire ainsi à des structures de résines polyphénoliques thermodurcissables.

La polybenzoxazine spécifique de l'invention dérive d'une benzoxazine (dénommée « Monomère M » dans la présente demande) du type halogénée qui répond à la formule générique (A) qui suit, « Hal » représentant un (au moins un, c'est-à-dire un ou plusieurs) halogène :

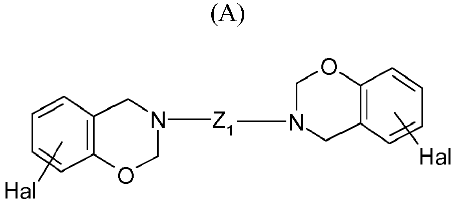

La figure 2 annexée en donne le schéma de synthèse général, sous apport thermique et avec élimination d'eau, à partir d'un phénol halogéné, de p-formaldéhyde et d'une diamine.

Dans la formule (A) ci-dessus, Z₁ représente un groupement de liaison (espaceur ou *« spacer »*) au moins divalent c'est-à-dire qu'il pourrait comporter plus de deux liaisons covalentes, par exemple trois ou quatre liaisons covalentes. De préférence, Z₁ est divalent, c'est-à-dire ne comporte que deux liaisons covalentes.

Z₁ peut être aliphatique, cycloaliphatique ou aromatique. Ce groupement, pouvant être éthyléniquement saturé ou insaturé, comporte par définition au moins un (c'est-à-dire un ou plusieurs) atome de carbone, et optionnellement au moins un (c'est-à-dire un ou plusieurs) hétéroatome choisi parmi O (oxygène), S (soufre), N (azote) et P (phosphore).

Selon un mode de réalisation particulier de l'invention, Z₁ représente un groupement aliphatique comportant 1 à 20, plus préférentiellement 1 à 16, en particulier 1 à 12 atomes de carbone, ou bien un groupement cycloaliphatique comportant 3 à 20, plus préférentiellement 3 à 16, en particulier 3 à 12 atomes de carbone. Plus préférentiellement encore, Z₁ représente un groupement alkylène en C₁-C₂₀, de préférence en C₁-C₁₆, en particulier en C₁-C₁₂.

Chaque noyau benzénique du Monomère M est porteur d'au moins un (c'est-à-dire un ou plusieurs) halogène. En outre, dans ce monomère de formule (A), un ou plusieurs atomes d'hydrogène d'au moins un ou de chaque noyau benzénique peuvent être substitués (ou non) par différents substituants, par exemple par des groupes fonctionnels susceptibles de favoriser l'adhésion du polymère au métal et/ou au caoutchouc.

De préférence, chaque noyau benzénique du monomère M est porteur d'un seul halogène (Hal) ou au maximum de deux, plus préférentiellement d'un et d'un seul halogène, ce dernier étant plus préférentiellement situé en position para de l'oxygène du cycle oxazine.

Selon un mode de réalisation particulièrement préférentiel, Hal représente le brome.

La figure 3 illustre un schéma de synthèse possible, à partir d'une diamine spécifique du type aliphatique (polyéthylène diamine), d'une benzoxazine halogénée particulière de formule (A-1), cette benzoxazine étant utilisable comme monomère (Monomère noté M-1) pour la synthèse ultérieure d'une polybenzoxazine conforme à l'invention. On note que Z₁ représente ici un groupement méthylène -(CH₂)ₓ- dans lequel le symbole « x » représente un nombre entier variant de préférence de 1 à 20, plus préférentiellement de 1 à 16, en particulier de 1 à 12. Une telle synthèse sera décrite plus en détail dans les exemples de réalisation qui suivent (Fig. 15).

Selon un autre mode de réalisation préférentiel, Z₁ représente un groupement aromatique comportant 6 à 30, plus préférentiellement 6 à 20 atomes de carbone. Ainsi, la figure 4 illustre un autre schéma de synthèse possible, cette fois à partir d'une diamine spécifique du type aromatique (p-xylylène diamine), d'un autre exemple de benzoxazine halogénée particulière de formule (A-2), utilisable comme monomère (Monomère noté M-2) pour la synthèse ultérieure d'une autre polybenzoxazine conforme à l'invention.

Les figures 5, 6 et 7 illustrent trois autres schémas de synthèse possibles, toujours à partir de phénol halogéné et de paraformaldéhyde d'une part, et d'autre part de différentes diamines spécifiques, toutes du type aliphatiques, d'autres exemples de benzoxazines particulières de formules respectives (A-3), (A-4) et (A-5), utilisables comme monomères (Monomères respectivement notés M-3, M-4 et M-5) pour la synthèse de polybenzoxazines conformes à l'invention.

A la figure 5, la répétition des motifs [-CH₂-CH₂-O-] (polyéthylène oxyde) sur le groupement de liaison Z₁ est susceptible de conduire à des polybenzoxazines de haute cristallinité, tandis qu'à la figure 6, la présence des groupes méthyle (polypropylène oxyde) sur Z₁ permet de diminuer la réactivité des deux groupements terminaux amine et de conduire à des polybenzoxazines de moindre cristallinité. A la figure 7, la présence sur le spacer Z₁ de l'atome (hétéroatome) de soufre dans les motifs récurrents [-CH₂-CH₂-S-] (polyéthylène thioéther), est susceptible d'améliorer encore l'adhésion au métal de la polybenzoxazine. Ainsi, on peut voir que la structure du groupement Z₁ du monomère benzoxazine peut être modifiée largement dans le but de moduler les propriétés du polymère final. Ceci constitue un avantage majeur de la présente invention.

La figure 8 illustre un autre schéma de synthèse possible, à partir d'un phénol halogéné, de paraformaldéhyde et d'une polyamine aliphatique spécifique consistant cette fois en une triamine, tris (3-aminopropyl) amine, d'un autre exemple de composé (tri)benzoxazine halogénée particulière de formule (A-6) utilisable comme monomère (Monomère noté M-6) pour la synthèse d'une autre polybenzoxazine selon l'invention.

La polybenzoxazine de l'invention (Polymère « P ») a donc pour caractéristique essentielle de comporter des unités structurelles récurrentes comportent au moins un motif répondant aux formule (I) (avant ouverture des cycles oxazine) ou formule (II) (après ouverture des cycles) ci-dessous : 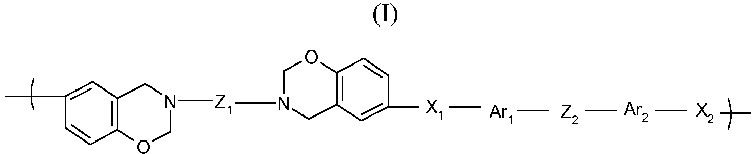 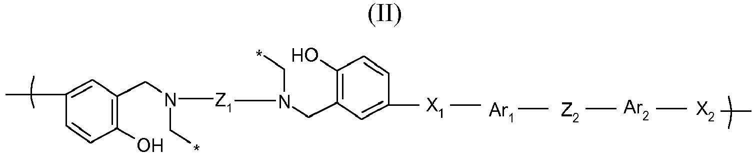 dans lesquelles :
- Z₁ a la définition principale et les définitions préférentielles déjà données précédemment pour le composé (monomère) benzoxazine;
- X₁ et X₂, identiques ou différents, représentent O (oxygène) ou S (soufre) ;
- Ar₁ et Ar₂, identiques ou différents, représentent un groupe phénylène, substitué ou non substitué ;
- Z₂ représente O ou (S)ₙ, le symbole « n » représentant un nombre entier égal à 1 (cas d'un seul atome de soufre) ou supérieur à 1 (cas de plusieurs atomes de soufre).

Par polymère doit être entendu ici tout homopolymère ou copolymère, notamment copolymère à blocs, avec des unités structurelles récurrentes comportent au moins un motif de formule (I) ou (II) ci-dessus ; le polymère de l'invention peut bien entendu comporter à la fois des motifs de formule (I) et des motifs de formule (II).

Dans la formule (II) ci-dessus, l'homme du métier comprendra immédiatement que les deux symboles « * » (identiques ou différents) représentent un rattachement quelconque du motif à un atome de carbone ou à un hétéroatome (choisi de préférence parmi O, S, N et P), rattachement ou liaison résultant de l'ouverture des cycles oxazine.

La figure 9 représente un schéma général de synthèse, par polycondensation, d'une telle polybenzoxazine (Polymère P) selon l'invention, à partir de la benzoxazine halogénée de formule (A) de la Fig. 2 (Monomère M) et d'un autre monomère, de formule générique notée (B), qui a pour caractéristique d'être du type diol ou thiol aromatique (Monomère générique noté « N »).

Dans les formules générales (I) et (II) ci-dessus, on a préférentiellement au moins une des caractéristiques suivantes qui est vérifiée :
- Ar₁ et Ar₂ représentent chacun un noyau benzénique non substitué ;
- X₁ et X₂ représentent chacun soit un atome de soufre, soit un atome d'oxygène ;
- Z₂ représente O ou S (soit « n » égal à 1), plus préférentiellement S ;
- Z₁ représente (CH₂)ₓ dans lequel « x » varie de préférence de 1 à 20, plus préférentiellement de 1 à 16, en particulier de 1 à 12.

Plus préférentiellement, c'est l'ensemble des caractéristiques préférentielles ci-dessus qui est vérifié simultanément.

En outre, dans les formules (I) ou (II) ci-dessus, un ou plusieurs atomes d'hydrogène d'au moins un ou de chaque noyau benzénique Ar₁ et Ar₂ pourraient être substitués (ou non) par un seul ou plusieurs substituants, identiques ou différents, par exemple par des groupes fonctionnels susceptibles de favoriser l'adhésion du polymère au métal et/ou au caoutchouc.

La polybenzoxazine « P » de la figure 9, plus exactement au moins une partie de ses unités récurrentes, a été également représentée à la figure 13, avant (Fig. 13a, Polymère P) et après (Fig. 13b, Polymère P') ouverture de ses cycles oxazine.

La figure 10 représente un schéma de synthèse particulier d'une polybenzoxazine spécifique selon l'invention (Polymère noté P-1) de formule (I-1), à partir d'une benzoxazine halogénée particulière (Monomère M-7) de formule (A-7) et d'un autre monomère spécifique (Monomère N-1) de formule (B-1) du type diol aromatique soufré (4,4'-thiodiphénol).

Dans cet exemple, on note en particulier que, selon un mode de réalisation préférentiel de l'invention déjà décrit, chaque noyau benzénique du monomère M-7 est porteur d'un et un seul halogène (Hal), plus préférentiellement du brome, cet halogène étant plus particulièrement situé en position para de l'oxygène du cycle oxazine.

Cette polybenzoxazine de la figure 10, ou plus exactement au moins une partie de ses unités récurrentes, a également été représentée à la figure 14, avant (Fig. 14a, Polymère P-1) et après (Fig. 14b, P-1') ouverture de ses cycles oxazine suite à un apport thermique suffisant. Ainsi, selon un mode de réalisation particulièrement préférentiel, la polybenzoxazine de l'invention se caractérise par des unités récurrentes comportant au moins un motif répondant aux formules particulières (I-1) (avant ouverture des cycles oxazine) ou (II-1) (après ouverture des cycles) : 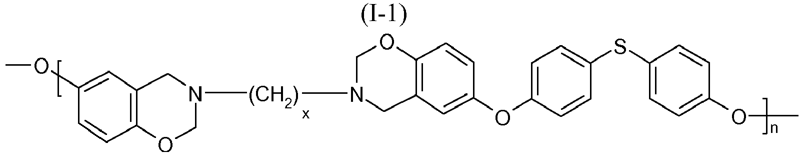 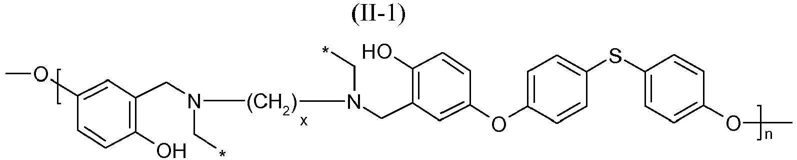
- le symbole «*» représentant le rattachement résultant de l'ouverture des cycles oxazines.

La figure 11 représente un autre schéma de synthèse particulière d'une autre polybenzoxazine spécifique (Polymère noté P-2) selon l'invention, de formule (I-2), à partir de la benzoxazine halogénée spécifique (Monomère M-7) précédente et d'un autre monomère spécifique (Monomère N-2) de formule (B-2), du type thiol aromatique (porteur en outre d'une fonction éther).

La figure 12 représente un autre schéma de synthèse particulière d'une autre polybenzoxazine spécifique (Polymère noté P-3) selon l'invention, de formule (I-3), à partir de la benzoxazine halogénée spécifique (Monomère M-7) précédente et d'un autre monomère spécifique (Monomère B2) du type thiol aromatique (porteur en outre d'une fonction thioéther).

Dans ces exemples des figures 11 et 12, comme pour la figure 10 précédente, on note en particulier que, selon un mode de réalisation préférentiel de l'invention déjà indiqué, chaque noyau benzénique du Monomère M-7 est porteur d'un et un seul halogène (Hal), plus préférentiellement du brome, situé plus particulièrement en position para de l'oxygène du cycle oxazine.

Comme déjà indiqué, les figures 13 et 14 représentent également les polybenzoxazines selon l'invention (ici respectivement notées P' et P-1') des Fig. 9 et Fig. 10, une fois leurs cycles oxazine ouverts.

Typiquement, la polybenzoxazine de l'invention peut comporter de dix à plusieurs centaines, préférentiellement de 50 à 300 unités structurelles à motifs de formule (I) et/ou (II), en particulier d'unités structurelles telles que représentées à titre d'exemples aux figures 10 à 14 et 17.

La polybenzoxazine de l'invention est avantageusement utilisable, à titre de primaire d'adhésion ou comme couche adhésive unique, pour revêtir un substrat en métal, tout au moins un substrat dont au moins la surface est au moins en partie métallique, et faire adhérer notamment ce substrat à du caoutchouc.

L'invention concerne également un tel substrat, notamment en acier tel qu'un acier au carbone. L'acier pourrait être clair (c'est-à-dire non revêtu) ou bien être revêtu au moins en partie d'au moins une couche (donc couche intermédiaire disposée entre acier et couche polybenzoxazine) d'un second métal dit métal de surface choisi dans le groupe constitué par aluminium, cuivre, zinc et les alliages d'au moins un de ces métaux avec au moins un autre métal (appartenant à ce groupe ou pas). Ce métal de surface est en particulier du laiton.

Pour faire adhérer le caoutchouc à la couche de polybenzoxazine, on pourra aussi utiliser tout système adhésif connu, par exemple une colle textile conventionnelle du type RFL comportant au moins un élastomère diénique tel que du caoutchouc naturel, ou toute colle équivalente connue pour conférer une adhésion satisfaisante entre du caoutchouc et des polymères conventionnels tels que polyester ou en polyamide, comme par exemple les compositions adhésives décrites dans les demandes de brevet WO 2013/017421, WO 2013/017422, WO 2013/017423, WO 2015/007641, WO 2015/007642.

Avant l'encollage ci-dessus, il pourra être avantageux d'activer la surface du polymère de l'invention, par exemple par voie physique et/ou chimique, pour améliorer sa prise de colle et/ou son adhésion finale au caoutchouc. Un traitement physique pourra consister par exemple en un traitement par un rayonnement tel qu'un faisceau d'électrons, ou par plasma ; un traitement chimique pourra par exemple consister en un passage préalable dans un bain de résine époxy et/ou de composé isocyanate.

L'homme du métier comprendra aisément que la connexion entre le substrat métallique pourvu de sa couche de polybenzoxazine et la couche de caoutchouc avec laquelle il est au contact, sera assurée définitivement lors de la cuisson (réticulation) finale de l'article en caoutchouc concerné.

### 5. EXEMPLES DE REALISATION DE L'INVENTION

Dans la présente demande, sauf indication expresse différente, tous les pourcentages (%) indiqués sont des % en masse.

Les essais qui suivent décrivent tout d'abord la synthèse d'un composé benzoxazine (Monomère M-8), puis celle d'une polybenzoxazine préférentielle (Polymère P-4) selon l'invention. Enfin, des tests d'adhésion sont conduits pour illustrer l'excellente performance adhésive des polybenzoxazines de l'invention.

### 5.1. Synthèse d'un composé benzoxazine halogéné (Monomère M-8)

On dispose pour cette synthèse d'un ballon rond à trois cols de 250 ml, équipé d'un thermomètre, d'une entrée d'azote, d'un agitateur magnétique et d'un réfrigérant.

La synthèse est réalisée selon le mode opératoire schématisé à la figure 15, comme expliqué en détail ci-après, à partir de trois composés : un phénol halogéné (composé 1 ; 4-bromophénol ; produit Aldrich B75808), une diamine aliphatique (composé 2; 1,8-diaminooctane ; produit Aldrich D22401) et une p-formaldéhyde (composé 3 ; produit Aldrich 158127), en présence de deux solvants (toluène et éthanol anhydres).

On verse dans le ballon le composé 1 (2 eq, 10,38 g, soit 60 mmol) puis de l'éthanol (51 ml). La présence d'éthanol est ici importante, empêchant la formation de produit intermédiaire du type triazine, instable. Sous agitation, on introduit ensuite le composé 2 (1 eq, 4,32 g, soit 30 mmol), le composé 3 (4 eq, 3,60 g soit 120 mmol) et enfin le toluène (102 ml). Le milieu réactionnel est chauffé (environ 75°C) à reflux pendant 72 h, puis placé sous évaporateur rotatif, à 50°C sous 50 mbar, pour évaporation des solvants. On obtient ainsi une huile de couleur jaune citron.

Cette huile subit ensuite une première purification sur une colonne SiO₂, à l'aide d'un éluant diéthyléther/cyclohexane, selon un rapport volumique des deux solvants variant de 10:35 (initial) à 10:20 (final). Les fractions purifiées contenant le monomère (M-8) sont réunies et les solvants évaporés. On obtient ainsi un solide jaune clair. Ce dernier est placé dans du méthanol (1 g pour 80 ml) et on chauffe à reflux (65°C) pendant 30 min. Puis on laisse la solution refroidir à température ambiante (environ 20°C) pour cristallisation du monomère. Le produit solide obtenu est isolé par filtration (filtre Büchner). On obtient ainsi des cristaux de couleur blanche, qui sont séchés à l'étuve sous vide à 50°C, durant toute une nuit, pour élimination de toute trace de solvant (rendement de réaction d'environ 60%).

La figure 16 annexée reproduit le spectre RMN ¹H (500 MHz) du Monomère M-8 ainsi synthétisé, dissous dans CD₂Cl₂. Cette analyse RMN donne les résultats suivants :
*¹H MMR (500 MHz) CD₂Cl₂ : 1.29 (m, 8H), 1.51 (m, 4H),* 2.67 *(m, 4H),* 3.92 (s, *4H),* 4.82 *(s, 4 H), 6-62* - 6-64- *(d, 2H), 7.08* (s, *2H), 7.17* - *7.19 (d, 2H).*

### 5.2. Synthèse d'une polybenzoxazine (Polymère P-4)

Cette synthèse est réalisée selon le mode opératoire schématisé à la figure 17, comme décrit en détail ci-après, à partir de deux monomères : la benzoxazine obtenue à l'étape précédente (Monomère M-8) et le diol aromatique soufré de formule (B-1) (4,4'-thiodiphenol ; Monomère N-1) déjà décrit à la figure 10 ; ceci en présence de carbonate de sodium (Na₂CO₃ ; produit Sigma Aldrich 13418), de solvants (anhydres) DMA (N,N-diméthylacétamide ; produit Sigma Aldrich 38839) et toluène (produit Acros Organics N°364411000). Les deux monomères (M-8 et N-1) sont préalablement séchés sous vide à 50°C toute la nuit, de même pour le carbonate de sodium mais à une température de 150°C.

La synthèse est conduite dans un ballon rond à quatre cols de 100 ml, équipé d'une entrée d'azote, d'un thermomètre, d'un agitateur magnétique et d'un séparateur « Dean Stark » surmonté d'un réfrigérant et d'un pont de distillation (pourvu d'une calotte chauffante). L'appareillage est séché sous vide en utilisant un pistolet à air chaud jusqu'à ce que le thermomètre atteigne une température d'au moins 100°C dans le ballon de réaction. On laisse l'ensemble refroidir à température ambiante (20°C), puis l'appareillage est mis sous courant d'azote pendant toute la synthèse.

On introduit alors dans le ballon tout d'abord le Monomère M-8 (1 eq, 1,5 g soit 2,79 mmol) de formule (A-8), puis le Monomère N-1 de formule (B-1) (1 eq, 0,61 g soit 2,79 mmol). On ajoute ensuite 20 ml de DMA (solvant des deux monomères), puis à titre de base Na₂CO₃ (3 eq, 0,89 g soit 8,36 mol) en suspension dans 4 ml de toluène. Le tout est purgé sous N₂ pendant 5 min, puis on chauffe le milieu réactionnel à 105°C. Une fois cette température atteinte (température de calotte chauffante d'environ 115°C), le pont de distillation de l'appareillage Dean Stark est chauffé à 110°C (avec la calotte chauffante) afin de faciliter la distillation azéotropique (distillation eau/toluène) conduite pendant environ 90 min. Puis on augmente progressivement la température du milieu réactionnel, par pallier de 10°C toutes les 30 min, jusqu'à atteindre 130°C. On laisse à cette température toute la nuit (12 h), puis on laisse refroidir à température ambiante (20°C). Le mélange réactionnel est finalement versé dans 250 ml d'eau distillée, sous forte agitation (barreau magnétique) ; on laisse sous agitation pendant 30 min (20°C), puis le précipité ainsi obtenu est isolé par filtration (filtre Büchner) et lavé avec 100 ml d'eau distillée ; au cours de ce lavage, pour extraire le carbonate, on ajoute de l'acide (HCl 10 % aq.) goutte à goutte jusqu'à pH neutre. Le précipité est une nouvelle fois lavé avec 100 ml d'eau distillée, séché sous vide à 80°C pendant toute une nuit (environ 12 h).

Le Polymère P-4 de la Fig. 17 a été ainsi obtenu, comme attesté par l'analyse RMN ¹H (500 MHz) dans le solvant DMA-*d6*, qui a donné les résultats suivants :
*7.36-7.38 (d, 2H), 7.21-7.33 (m, 2H), 7.11-7.16 (m, 5H), 6.99-7.0 (s, 2H) 6.8-6.82 (d, 1H), 6.62 (s, 1H), 6.78-6.80 (d, 1H), 4.24 (s, 4H), 3.55-3.80 (m, 4H), 2.07-2.14 (m, 4H), 1.08-1.40 (m, 12H).*

Ce Polymère P-4, sous forme d'une poudre de couleur beige, a été également analysé par DSC (*Differential Scanning Calorimetry*) entre -80°C et +260°C selon une rampe de 10°C/min (appareil DSC "822-2" de Mettler Toledo ; atmosphère azote). L'analyse a montré au premier passage (entre -80°C et +260°C) une exothermie (correspondant à l'ouverture des cycles oxazine, et à la réticulation du polymère) au-delà de 200°C, avec un maximum à 240°C. Au cours des deuxième et troisième passages de DSC conduits entre -80°C et +260°C, aucune transition vitreuse apparente (Tg) n'a été visible, ce qui atteste de la très grande stabilité thermique du polymère de l'invention.

### 5.3. Test d'adhésion dans un composite métal / caoutchouc

Une partie (650 mg) du Polymère P-4 précédemment préparé a été dissoute dans 8 ml d'un mélange (selon ratio volumique 10:1) toluène / DTP (1,3-diméthyl-3,4,5,6-tétrahydro-2(*1H-*pyrimidinone ; CAS 7226-23-5), ceci pour former une solution transparente légèrement jaune dont une fraction (0,7 ml) a été ensuite déposée de manière uniforme sur un ruban (film) en laiton de dimensions 10 cm x 2,5 cm et d'épaisseur 0,3 mm ; l'ensemble a été placé à l'étuve à 175°C (ventilation à l'air) durant 5 min, puis 5 min supplémentaires à 230°C sous vide afin d'une part d'éliminer toute trace de solvant et d'autre part d'ouvrir au moins en partie (c'est-à-dire totalement ou partiellement) les cycles oxazine du polymère, cette dernière étape s'accompagnant d'un changement prononcé de couleur du polymère, passant au jaune vif.

Après refroidissement à température ambiante, le ruban pourvu en surface de sa fine couche (épaisseur 5 à 10 µm) de polybenzoxazine ainsi formée, a été ensuite soumis à une opération d'encollage conventionnelle en deux temps (encollage deux bains), tout d'abord par immersion dans un premier bain aqueux (environ 94% d'eau) à base de résine époxy (polyglycérol polyglycidyl éther, environ 1%) et de composé isocyanate (bloqué caprolactame, environ 5%), première étape d'encollage suivie d'un séchage (2 min à 100°C) puis d'un traitement thermique (5 min à 200°C). Puis le ruban ainsi traité a été immergé dans un second bain aqueux de colle RFL (environ 81% en poids d'eau) à base de résorcinol (environ 2%), formol (environ 1%) et d'un latex de caoutchouc (environ 16% de caoutchoucs NR, SBR et VP-SBR) ; il a été enfin séché au four pendant 2 min à 130°C, puis traité thermiquement 5 min à 200°C.

Le ruban en laiton ainsi revêtu du film de polybenzoxazine puis encollé, a été ensuite placé entre deux couches de composition de caoutchouc conventionnelle pour armature de ceinture de bandage pour véhicule tourisme, composition à base de caoutchouc naturel, de noir de carbone et silice à titre de charge, et d'un système de vulcanisation (soufre et accélérateur sulfénamide) ; cette composition étant dépourvue de sel de cobalt. Puis l'éprouvette de composite métal / caoutchouc ainsi préparée a été placée sous presse et le tout cuit (vulcanisé) à 165°C pendant 15 min sous une pression de 20 bar.

Après vulcanisation du caoutchouc, on a obtenu un excellent collage entre la matrice de caoutchouc et le ruban métallique malgré l'absence de sel de cobalt dans la matrice de caoutchouc : lors de tests de pelage (à 20°C), on a constaté en effet que la rupture se produisait systématiquement dans la matrice de caoutchouc elle-même et non à l'interphase entre métal et caoutchouc.

D'autres essais de collage ont été conduits sur un ruban en acier clair (non revêtu) ; ils ont révélé eux aussi une excellente adhésion au caoutchouc (rupture systématique dans la matrice de caoutchouc).

En conclusion, la polybenzoxazine selon l'invention offre aux substrats métalliques l'avantage majeur de pouvoir ensuite être collés à des matrices de caoutchouc en utilisant de simples colles textiles telles que des colles RFL, ou encore directement (c'est-à-dire sans emploi de telles colles) à ces matrices de caoutchouc, par exemple lorsque ces dernières contiennent des élastomères insaturés fonctionnalisés appropriés tels que des élastomères époxydés.

Ainsi, peuvent être utilisés des substrats métalliques revêtus ou non de couches métalliques adhésives telles que du laiton, ainsi que des matrices de caoutchouc environnantes dépourvues de sels métalliques, en particulier de sels de cobalt.

En outre, ceci constituant un avantage notable comparativement aux autres polymères connus décrits en introduction du présent mémoire, les polybenzoxazines de l'invention ont la capacité remarquable, à haute température, d'ouvrir leurs cycles oxazine et de conduire ainsi à une structure de résine polyphénolique thermodurcissable. Ceci leur confère une meilleure stabilité thermique, sans transition de phase visible à des températures supérieures à 200°C. Leur microstructure spécifique permet enfin, très avantageusement, d'ajuster la flexibilité de la molécule selon les applications particulières visées.

## Revendications

1. Polybenzoxazine dont les unités récurrentes comportent au moins un motif répondant aux formules (I) ou (II) : 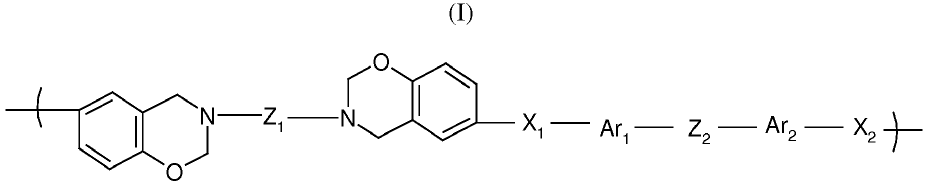 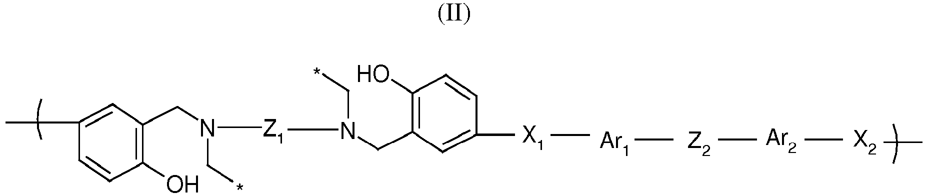 dans lesquelles :
- Z₁ représente un groupement de liaison au moins divalent, aliphatique, cycloaliphatique ou aromatique, comportant au moins un atome de carbone et optionnellement au moins un hétéroatome choisi parmi O, S, N et P;
- X₁ et X₂, identiques ou différents, représentent O ou S ;
- Ar₁ et Ar₂, identiques ou différents, représentent un groupe phénylène, substitué ou non substitué ;
- Z₂ représente O ou (S)ₙ, le symbole « n » représentant un nombre entier égal à 1 ou supérieur à 1 ;
- le symbole « * » représentant le rattachement résultant de l'ouverture des cycles oxazines.

2. Polybenzoxazine selon la revendication 1, dans laquelle Z₁ représente un groupement aliphatique comportant 1 à 20, de préférence 1 à 16 atomes de carbone, ou un groupement cycloaliphatique comportant 3 à 20, de préférence 3 à 16 atomes de carbone.

3. Polybenzoxazine selon la revendication 2, dans laquelle Z₁ représente un groupement alkylène en C₁-C₂₀, de préférence en C₁-C₁₆.

4. Polybenzoxazine selon la revendication 1, dans laquelle Z₁ représente un groupement aromatique comportant 6 à 30, de préférence 6 à 20 atomes de carbone.

5. Polybenzoxazine selon l'une quelconque des revendications 1 à 4, dans laquelle Ar₁ et Ar₂, représentent chacun un noyau benzénique non substitué.

6. Polybenzoxazine selon l'une quelconque des revendications 1 à 5, dans laquelle X₁ et X₂ représentent chacun S.

7. Polybenzoxazine selon l'une quelconque des revendications 1 à 5, dans laquelle X₁ et X₂ représentent chacun O.

8. Polybenzoxazine selon l'une quelconque des revendications 6 ou 7, dans laquelle Z₂ représente O ou S, de préférence S.

9. Polybenzoxazine selon la revendication 8, dont les unités récurrentes comportent au moins un motif répondant aux formules (I-1) ou (II-1) : 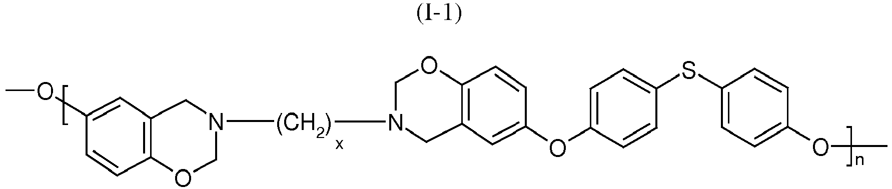 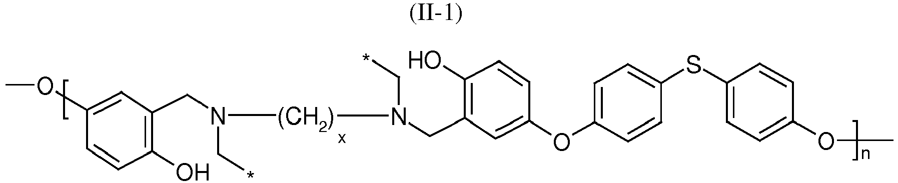 dans lesquelles « x » est un entier variant de 1 à 16, de préférence de 1 à 12 et le symbole « * » représentant le rattachement résultant de l'ouverture des cycles oxazines.

10. Utilisation d'une polybenzoxazine selon l'une quelconque des revendications 1 à 9, comme revêtement d'un substrat dont au moins la surface est au moins en partie métallique.

11. Utilisation selon la revendication 10, pour le collage du substrat à un caoutchouc.

12. Substrat dont au moins la surface est au moins en partie métallique, au moins ladite partie métallique étant revêtue d'une polybenzoxazine selon l'une quelconque des revendications 1 à 9.

13. Substrat selon la revendication 12, le substrat étant en acier, de préférence en acier au carbone.

14. Substrat selon la revendication 13, l'acier étant un acier clair.

15. Substrat selon la revendication 13, l'acier étant revêtu au moins en partie d'au moins une couche d'un second métal dit métal de surface choisi dans le groupe constitué par aluminium, cuivre, zinc et les alliages d'au moins un de ces métaux, ledit métal de surface étant de préférence du laiton.

## Patentansprüche

1. Polybenzoxazin, dessen Wiederholungseinheiten mindestens eine Einheit umfassen, die den Formeln (I) oder (II) entspricht: 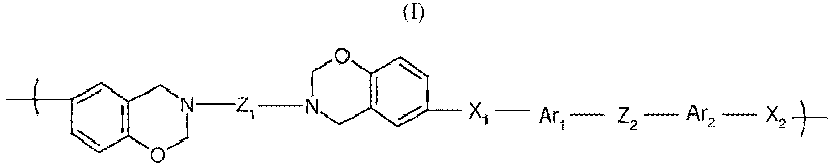 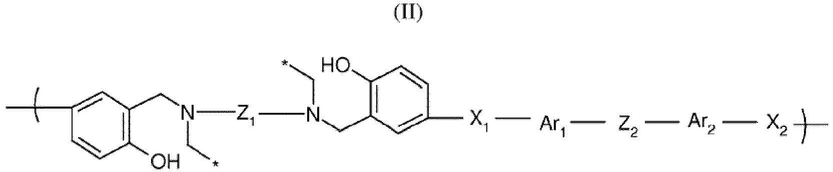 in denen:
- Z₁ für eine mindestens zweiwertige, aliphatische, cycloaliphatische oder aromatische Verbindungsgruppe mit mindestens einem Kohlenstoffatom und gegebenenfalls mindestens einem Heteroatom, das aus O, S, N und P ausgewählt ist, steht;
- X₁ und X₂ gleich oder verschieden sind und für O oder S stehen;
- Ar₁ und Ar₂ gleich oder verschieden sind und für eine substituierte oder unsubstituierte Phenylengruppe stehen;
- Z₂ für O oder (S)ₙ steht, wobei das Symbol "n" für eine ganze Zahl mit einem Wert von 1 oder mehr als 1 steht;
- das Symbol "*" für die sich aus der Öffnung der Oxazinringe ergebende Verknüpfung steht.

2. Polybenzoxazin nach Anspruch 1, wobei Z₁ für eine aliphatische Gruppe mit 1 bis 20 und vorzugsweise 1 bis 16 Kohlenstoffatomen oder eine cycloaliphatische Gruppe mit 3 bis 20 und vorzugsweise 3 bis 16 Kohlenstoffatomen steht.

3. Polybenzoxazin nach Anspruch 2, wobei Z₁ für eine C₁-C₂₀- und vorzugsweise C₁-C₁₆-Alkylengruppe steht.

4. Polybenzoxazin nach Anspruch 1, wobei Z₁ für eine aromatische Gruppe mit 6 bis 30 und vorzugsweise 6 bis 20 Kohlenstoffatomen steht.

5. Polybenzoxazin nach einem der Ansprüche 1 bis 4, wobei Ar₁ und Ar₂ jeweils für einen unsubstituierten Benzolkern stehen.

6. Polybenzoxazin nach einem der Ansprüche 1 bis 5, wobei X₁ und X₂ jeweils für S stehen.

7. Polybenzoxazin nach einem der Ansprüche 1 bis 5, wobei X₁ und X₂ jeweils für O stehen.

8. Polybenzoxazin nach Anspruch 6 oder 7, wobei Z₂ für O oder S, vorzugsweise S, steht.

9. Polybenzoxazin nach Anspruch 8, dessen Wiederholungseinheiten mindestens eine Einheit umfassen, die den Formeln (I-1) oder (II-1) entspricht: 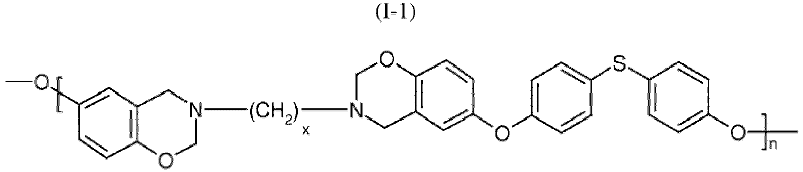 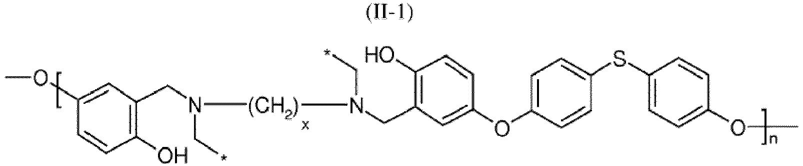 in denen "x" für eine ganze Zahl von 1 bis 16 und vorzugsweise 1 bis 12 steht und das Symbol "*" für die sich aus der Öffnung der Oxazinringe ergebende Verknüpfung steht.

10. Verwendung eines Polybenzoxazins nach einem der Ansprüche 1 bis 9 als Beschichtung eines Substrats, wobei mindestens eine Oberfläche davon teilweise metallisch ist.

11. Verwendung nach Anspruch 10 zum Verkleben des Substrats mit einem Kautschuk.

12. Substrat, wobei mindestens eine Oberfläche davon teilweise metallisch ist, wobei mindestens der metallische Teil mit einem Polybenzoxazin nach einem der Ansprüche 1 bis 9 beschichtet ist.

13. Substrat nach Anspruch 12, wobei das Substrat aus Stahl, vorzugsweise aus unlegiertem Stahl, ist.

14. Substrat nach Anspruch 13, wobei es sich bei dem Stahl um einen blanken Stahl handelt.

15. Substrat nach Anspruch 13, wobei der Stahl mindestens teilweise mit einem als Oberflächenmetall bezeichneten zweiten Metall aus der Gruppe bestehend aus Aluminium, Kupfer, Zink und Legierungen von mindestens einem dieser Metalle beschichtet ist, wobei es sich bei dem Oberflächenmetall vorzugsweise um Messing handelt.

## Claims

1. Polybenzoxazine, the repeat units of which comprise at least one unit corresponding to the formulae (I) or (II): 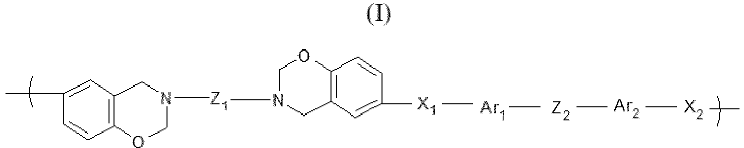 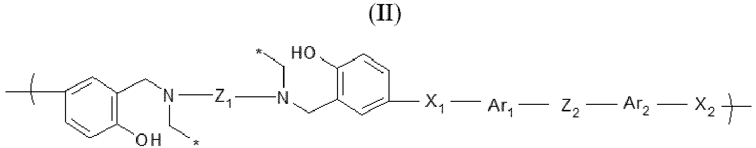 in which:
- Z₁ represents an at least divalent, aliphatic, cycloaliphatic or aromatic bonding group comprising at least one carbon atom and optionally at least one heteroatom selected from O, S, N and P;
- X₁ and X₂, which are identical or different, represent O or S;
- Ar₁ and Ar₂, which are identical or different, represent a substituted or unsubstituted phenylene group;
- Z₂ represents O or (S)ₙ, the symbol "n" representing an integer equal to 1 or greater than 1,
- the symbol "*" represents the attachment resulting from the opening of the oxazine rings.

2. Polybenzoxazine according to Claim 1, in which Z₁ represents an aliphatic group comprising from 1 to 20, preferably from 1 to 16, carbon atoms or a cycloaliphatic group comprising from 3 to 20, preferably from 3 to 16, carbon atoms.

3. Polybenzoxazine according to Claim 2, in which Z₁ represents a C₁-C₂₀, preferably C₁-C₁₆ alkylene group.

4. Polybenzoxazine according to Claim 1, in which Z₁ represents an aromatic group comprising from 6 to 30, preferably from 6 to 20, carbon atoms.

5. Polybenzoxazine according to any one of Claims 1 to 4, in which Ar₁ and Ar₂ each represent an unsubstituted benzene ring.

6. Polybenzoxazine according to any one of Claims 1 to 5, in which X₁ and X₂ each represent S.

7. Polybenzoxazine according to any one of Claims 1 to 5, in which X₁ and X₂ each represent O.

8. Polybenzoxazine according to either one of Claims 6 and 7, in which Z₂ represents O or S, preferably S.

9. Polybenzoxazine according to Claim 8, the repeat units of which comprise at least one unit corresponding to the formulae (1-1) or (II-1): 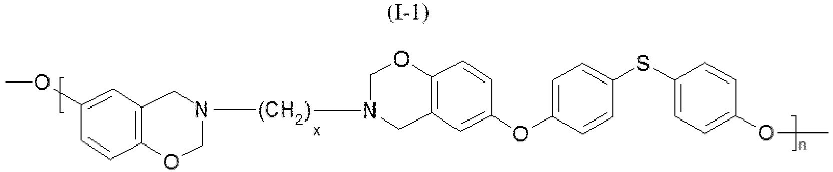 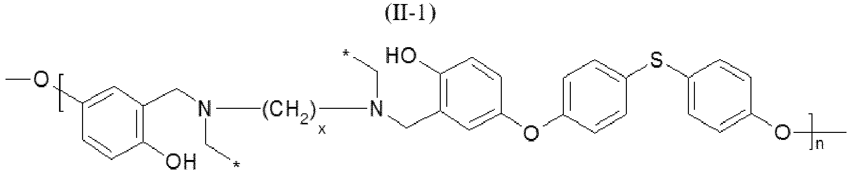 in which "x" is an integer varying from 1 to 16, preferably from 1 to 12 and the symbol "*" represents the attachment resulting from the opening of the oxazine rings.

10. Use of a polybenzoxazine according to any one of Claims 1 to 9, as coating for a substrate, at least the surface of which is at least partially metallic.

11. Use according to Claim 10, for the adhesive bonding of the substrate to a rubber.

12. Substrate, at least the surface of which is at least partially metallic, at least said metallic part being coated with a polybenzoxazine according to any one of Claims 1 to 9.

13. Substrate according to Claim 12, the substrate being made of steel, preferably made of carbon steel.

14. Substrate according to Claim 13, the steel being a bright steel.

15. Substrate according to Claim 13, the steel being at least partially coated with at least one layer of a second metal, referred to as surface metal, selected from the group consisting of aluminium, copper, zinc and alloys of at least one of these metals, said surface metal being preferably brass.
